# EUROPEAN PATENT SPECIFICATION

(11) **EP 4 077 245 B1**
(45) Date of publication and mention of the grant of the patent: **13.12.2023**
(21) Application number: 20839282.9
(22) Date of filing: 17.12.2020
(51) Int. Cl.: C07B 59/00, B01D 15/00, B01J 20/00

(54) **APPARATUS AND METHOD FOR SOLID PHASE EXTRACTION**
GERÄT UND VERFAHREN ZUR FESTPHASENEXTRAKTION
APPAREIL ET PROCÉDÉ D'EXTRACTION EN PHASE SOLIDE

(30) Priority: 20.12.2019 GB 201919016
(43) Date of publication of application: 26.10.2022
(73) Proprietor: GE Healthcare Limited, Chalfont St. Giles, Buckinghamshire HP8 4SP (GB)
(72) Inventor: MCROBBIE, Graeme, Walter, St Giles Buckinghamshire HP8 4SP (GB); KHAN, Imtiaz, Ahmed, St Giles Buckinghamshire HP8 4SP (GB); SHALES, Jonathan, Robert, St Giles Buckinghamshire HP8 4SP (GB)
(74) Representative: Smart, Jessica Ann
(86) International application number: PCT/EP2020/086901
(87) International publication number: WO 2021/123073

(56) References cited:
- WO-A1-2018/115353

## Description

The present invention relates to the field of solid phase extraction (SPE). More particularly, the present invention is directed to an apparatus and a method for optimising SPE conditions.

Automated synthesis systems are important for the production of radiopharmaceuticals. Synthesis systems, such as the FASTlab^{®} synthesizer (GE Healthcare) provide for production of doses for clinical applications. The FASTlab synthesizer accepts and operates a method through a device for producing a radiopharmaceutical. Examples of such radiopharmaceuticals include ¹⁸F-FLT ([¹⁸F]fluorothymidine), ¹⁸F-FDDNP (2-(1-{6-[(2-[¹⁸F]fluoroethyl)(methyl)amino]2-naphthyl}ethylidene)malonitrile), ¹⁸F-FHBG (9-[4-[¹⁸F]fluoro-3-(hydroxymethyl)butyl]guanine or [¹⁸F]-penciclovir), ¹⁸F-FESP ([¹⁸F]-fluoroethylspiperone), ¹⁸F-p-MPPF (4-(2-methoxyphenyl)-1-[2-(N-2-pyridinyl)-p-[¹⁸F]fluorobenzamido]ethylpiperazine) and ¹⁸F-FDG ([¹⁸F]-2-deoxy-2-fluoro-D-glucose), and the like.

Such synthesis systems/devices are used with cassettes that comprise a flowpath comprising a first end and a second end; and a plurality of valves oriented along said flowpath, wherein each of said plurality of valves is selectively fluidly connected to one of a number of components, which typically include reagent vials, a reaction vessel where one or more reactions of the process of producing the compound are carried out, cartridges, filters, syringes, tubings, and connectors for synthesizing a particular radiotracer. Different radiopharmaceuticals are made using a dedicated cassette which is customized for that radiopharmaceutical. The device is configured to cooperatively engage the components so as to be able to actuate each of the stopcocks and syringes to drive a source fluid with a radioisotope through the device to achieve a chemical synthesis process. The synthesis system may also include one or more (e.g. two) heating cavity/heating elements which receives the first reaction vessel, so as to provide any heat required for chemical reactions. WO2018/115353 discloses a method to condition SPE cartridges which can be used in the automated synthesis of radiolabeled compounds.

The synthesis system is programmed to operate the required pumps, syringes, valves, heating elements, as well as controlling the provision of a motive gas (e.g. nitrogen) and the application of vacuum so as to direct the source fluid into mixing with the reagents, performing the chemical reactions, through the appropriate purification cartridges, and selectively pumping the output tracer and waste fluids into appropriate vial receptacles for end products, waste products, etc. While the fluid collected in the output vial is typically input into another system for either purification and/or dispensing, the synthesis system can also be connected to or include a separate purification system which returns a purified (or part purified compound) back to the system for further processing.

Such an automated synthesizer of the prior art is described in WO 2007/042781.

While existing synthesis systems such as the FASTlab synthesizer may include some form of purification step, the system is not deigned to, nor does it, optimise purification conditions. Purification methods such as those used in the prior art (for example FASTIab systems) are currently optimised using existing SPE manifold systems, where the SPE is carried out manually. It is time consuming to determine an appropriate purification method this way, as it typically involves manufacture of a product each time, followed by a different purification parameter, or parameters. In addition, once appropriate purification conditions have been identified, the resulting purification method needs further adaptations and optimization in order to be compatible with the synthesis system.

There are numerous examples of SPE robots available on the market. A key benefit of using the present invention is that it allows SPE purification methods to be quickly developed using already existing production devices. The time taken to transfer a SPE method onto existing devices (e.g., the FASTlab) is effectively eliminated because the backbone device can be the same for both.

Existing SPE robots are designed to collect larger fractions than generally used in the present invention. The ability to collect smaller fractions of eluent for analysis is an improvement on current SPE robots. The larger the collected fraction, the less that can be deduced about where the impurity/product is eluting.

In addition, existing SPE robots take up a large footprint in the lab. The present invention provides the advantage that an additional piece of equipment dedicated to SPE optimization is not needed where the lab already has an automated synthesis system.

For example, the cassette of the present invention can be used in conjunction with a FASTlab system that has been programmed to assess up to three SPE cartridges with up to 6 different mobile phases in one sequence. Furthermore, this provides the advantage that the cartridges can be re-used, allowing them to be tested repeatedly, which saves both in terms of time and cost of cartridges.

It would be beneficial if a process to optimise purification of the product could be developed to reduce the timescales as described above, and that is compatible with current synthesiser systems.

The present invention provides a device for optimising the SPE purification conditions for the isolation of a compound from a composition containing that compound, preferably from a crude reaction mixture. The compound to be isolated from the composition may be any radioactive or non-radioactive compound, preferably not a radioactive compound. The apparatus of the first aspect of the invention is described as a cassette. Such a cassette can be an independent piece of apparatus and/or can be a piece of apparatus which fits into an already existing apparatus, replacing some of the original parts.

In a first aspect, the present invention provides a cassette for determining optimised solid phase extraction (SPE) purification conditions, wherein said cassette comprises:
(i) a flowpath comprising a first end and a second end; and
(ii) a plurality of valves oriented along said flowpath, wherein each of said plurality of valves is selectively fluidly connected to one of a number of components,
wherein said components comprise:
(a) 1-5 composition vials;
(b) 1-3 SPE cartridges;
(c) 4-10 solvent vials;
(d) a water vial; and
(e) a transfer line.

The cassette of the invention has a flowpath comprising a first end and a second end. The flowpath is a channel that is suitable for transporting materials, particularly fluids, such as solvents and the composition, e.g. the crude reaction mixture. The composition vials may be crude reaction mixture vials, single reference standard vials or reference standard mixture vials. The 'crude reaction mixture' may include the desired product in a mixture with one or more impurities. The single reference standard' may be a single impurity, e.g. an impurity that is commonly produced with the desired product. Similarly, the 'reference standard mixture' may be a mixture of impurities, e.g. a mixture of impurities that are commonly produced with the desired product.

By 'fluidly connected', it is meant that fluid can pass into and from the vials and (selectively) through the valves to other parts of the cassette. A suitable valve may be a 3-way valve having three ports and means to put any two of the three associated ports in fluid communication with each other while fluidly isolating the third port. A suitable valve may also be a stopcock valve comprising a rotatable stopcock.

The cassette may be joined to, or compatible with, a system or device for synthesis of the compound for which the cassette of the invention is provided, for example the known FASTlab system. The cassette of the present invention is compatible with the synthesizer system used for radiopharmaceutical synthesis, as described above, and is specifically configured to optimise SPE purification conditions. The present invention thus allows the determination of an optimised SPE purification process for a product on the same system and/or a compatible system as is used for the production of that product. This provides clear advantages over existing methods. For example, because the purification process is optimised on the same or a compatible system as used for the production of the desired product, no further adaptation is needed for the purification process to work on that system, in contrast with existing methods.

The cassette is designed such that it provides a combination of SPE cartridges on one hand with solvent vials providing different solvents (either different chemical compositions or different concentrations) and on the other hand, to provide an apparatus where alternative parameters of SPE and solvent are available and combined to determine an optimum purification process.

Preferably, the cassette comprises:
(i) 3 SPE cartridges and 6 solvent vials; or
(ii) 2 SPE cartridges and 8 solvent vials; or
(iii) 1 SPE cartridge and 10 solvent vials.

One of the solvent vials may be used to condition the SPE cartridge(s). The conditioning may be carried out by passing 100% solvent through the SPE cartridge, followed by passing water through the SPE cartridge. In this case, the number of solvent vials used for purification can be regarded as 5 solvent vials for 3 SPE cartridges, 7 solvent vials for 2 SPE cartridges and 9 solvent vials for 1 SPE cartridge.

In one embodiment the cassette of the invention does not include any means for processing radio isotopes, e.g. [¹⁸F]fluoride. For example, the cassette does not include an 'ion-exchange cartridge', e.g., an SPE cartridge that retains ¹⁸F and allows ¹⁸O to pass through when an aqueous solution from the nuclear reaction ¹⁸O(p,n)¹⁸F is passed through. Such ion-exchange cartridges include anion exchange cartridges, for example quaternary methylammonium (QMA) cartridges, and these are typically found in known cassettes designed for radiosynthesis of radiolabelled compounds. In one embodiment the cassette also does not include a 'cationic counterion', where the cationic counterion may be a positively-charged counterion such as a metal complex of a cryptand or a tetraalkylammonium salt or a large but soft metal ion such as rubidium or caesium.

In one embodiment the cassette does not include a reaction vessel.

The cassette may have 25 valves in a linear array. Where the cassette has 25 valves in a linear array and the cassette comprises 3 SPE cartridges and 6 solvent vials,
(i) the 1-5 composition vials are fluidly connected to the 2^{nd}, 12^{th}, 13^{th}, 14^{th} and/or 16^{th} valve, preferably wherein a maximum of 3 composition vials are used;
(ii) the 3 SPE cartridges are preferably fluidly connected to the 18^{th}, 20^{th} and 22^{nd} valves;
(iii) the 6 solvent vials are fluidly connected to the 4^{th}, 5^{th}, 7^{th}, 8^{th}, 9^{th} and 10^{th} valves; and
(iv) the water vial is fluidly connected to the 15^{th} valve.

Where the cassette has 25 valves in a linear array and the cassette comprises 2 SPE cartridges and 8 solvent vials,
(i) the 1-5 composition vials are fluidly connected to the 2^{nd}, 12^{th}, 13^{th}, 14^{th} and/or 16^{th} valve, preferably wherein a maximum of 2 composition vials are used;
(ii) the 2 SPE cartridges are preferably fluidly connected to the 20^{th} and 22^{nd} valves;
(iii) the 8 solvent vials are fluidly connected to the 4^{th}, 5^{th}, 7^{th}, 8^{th}, 9^{th}, 10^{th}, 17^{th} and 18^{th} valves; and
(iv) the water vial is fluidly connected to the 15^{th} valve.

Where the cassette has 25 valves in a linear array and the cassette comprises 1 SPE cartridge and 10 solvent vials,
(i) the 1-5 composition vials are fluidly connected to the 2^{nd}, 12^{th}, 13^{th}, 14^{th} and/or 16^{th} valve, preferably wherein a maximum of 1 composition vial is used;
(ii) the 1 SPE cartridge is preferably fluidly connected to the 22^{nd} valve;
(iii) the 10 solvent vials are fluidly connected to the 4^{th}, 5^{th}, 7^{th}, 8^{th}, 9^{th}, 10^{th}, 17^{th}, 18^{th}, 19^{th} and 20^{th} valves; and
(iv) the water vial is fluidly connected to the 15^{th} valve.

The cassette described above may further comprise:
(v) a syringe fluidly connected to the 3^{rd} valve, preferably wherein the syringe is a 1 mL syringe; and
(vi) a syringe fluidly connected to the 11^{th} valve, preferably wherein the syringe is a 7 mL syringe; and
(vii) a syringe fluidly connected to the 24^{th} valve, preferably wherein the syringe is a 7 mL syringe.

The cassette described above may further comprise:
(viii) tubing connecting the 1^{st} and 25^{th} valves.

The cassette described above may further comprise:
(ix) an output for eluent from the SPE cartridge(s) fluidly connected to the 23^{rd} valve.

In a second aspect of the invention, the present invention provides a method for determining optimised SPE purification conditions for a compound from a composition, the method comprising:
(i) provision of the cassette as defined according to the first aspect of the invention;
(ii) the cassette comprising a composition of the compound in each of said 1-5 composition vials or addition of such a composition to each of said 1-5 composition vials;
(iii) passing an aliquot of said composition into each of said 1-3 SPE cartridges;
(iv) passing a particular combination of aliquots of solvent from at least 4 of said 4-10 solvent vials into one or more of the SPE cartridges, wherein the solvent in each of said 4-10 solvent vials is either a different solvent or the same solvent at different concentration;
(v) eluting the compound to be purified from the or each SPE cartridge;
(vi) evaluating the eluted products of step (v); and
(vii) determining the optimised purification conditions by comparing the eluted products of step (v) from each cartridge and each solvent.

The at least one solvent is selected from the group consisting of: (i) ethanol, (ii) methanol, (iii) acetonitrile, or any alternative organic solvent known in the art, or combinations thereof. It is preferred that the product be eluted with ethanol or aqueous ethanol, because if a different solvent is used, an aqueous solvent exchange step would need to be included.

The method may further comprise the step of conditioning the 1-3 SPE cartridges as a first step of the process. The cartridges may be conditioned with 100% organic solvent (either methanol, ethanol or acetonitrile), followed by conditioning with water. The volume of organic solvent and water used for conditioning can be varied to suit different cartridges. For example, 7 mL of organic solvent and 7 mL of water can be suitable. Or a smaller volume of organic solvent can be suitable, e.g. 2 mL, and in this case multiple cartridges can be conditioned using solvent from just one syringe. In one embodiment a full syringe of water is used to ensure the solvent is completely removed. Following conditioning, the crude product is loaded onto the SPE cartridge(s).

Each cartridge is then washed with mobile phase eluent in fractions in variable volumes, where the volume is a compromise between "more detail" i.e. smaller volumes and "analysis time" i.e. the smaller the volumes collected the more samples need to be analysed. The fraction volume is preferably 1 mL. The eluent fractions are collected and analysed, e.g. by analytical HPLC. The cartridges can be cleaned with 100% organic solvent and reconditioned ready to be used again with a different mobile phase composition during the process. To minimise operator processing time, the samples can be collected in a 96-well plate and analysed on a HPLC system that uses an autosampler injection system. The collected samples can be analysed overnight and then the results interpreted the following morning. The evaluation in step (vi) may be performed using any suitable method, for example, HPLC, LC-MS or TLC.

1, 2, 3, 4 or 5 composition vials may be used. In particular, 1, 2 or 3 composition vials may be used. Preferably, the number of composition vials may be the same as the number of SPE cartridges.

The term 'eluting' refers to passing a solution through an SPE cartridge with the aim to release a compound or compounds of interest that has or have been bound to the solid phase. Eluting may be carried out by passing a suitable solvent through the SPE cartridge and through the transfer line for collection, preferably wherein the collection is in a 96-well plate. The suitable solvent is one that acts to release the compounds of interest from the SPE cartridge and can be, for example, an organic solvent, an acidic solvent, or a basic solvent depending on the chemical properties of the compound of interest and the nature of the SPE column chemistry.

The above method may further comprise the step of eluting impurities. The elution of the impurities may be carried out before and/or after step (v) above of eluting the desired product. Preferably, the elution of the impurities may be carried out before and after step (v) above of eluting the desired product.

The purification process is ideally effective if the product obtained from the composition is obtained in a purity of at least 95%, preferably at least 97%, more preferably at least 99%.

The invention also provides a compound as purified according to the second aspect of the invention.

In a third aspect, the invention provides a kit comprising:
(i) a cassette according to the first aspect,
(ii) 1-5 composition vials;
(iii) 1-3 SPE cartridges;
(iv) 4-10 solvent vials;
(v) a water vial; and
(vi) a transfer line.

### Figures

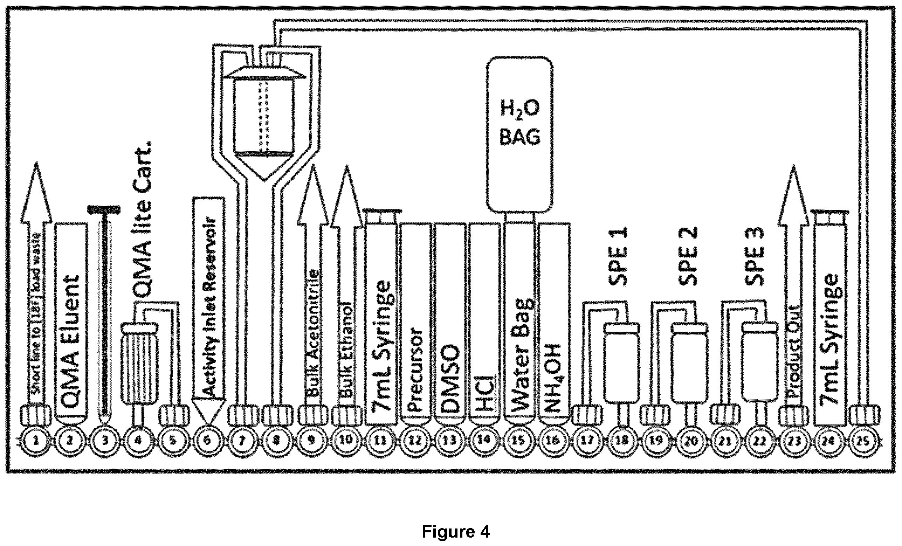

Figures 1 to 6 are provided to exemplify the invention in a non-limiting fashion:
Figure 1 provides an example of an embodiment of the cassette of the invention including 3 SPE cartridges and 6 solvent vials (labelled as mobile phases).
Figure 2 provides an example of an embodiment of the cassette of the invention including 2 SPE cartridges and 8 solvent vials (labelled as mobile phases).
Figure 3 provides an example of an embodiment of the cassette of the invention including 1 SPE cartridge and 10 solvent vials (labelled as mobile phases).
Figure 4 provides an example of a cassette that is typically used with a FASTlab system for comparison with the invention.
Figure 5 shows the results of an embodiment of the method of the invention applied to a hydroxy impurity in the Flurpiridaz crude product.
Figure 6 shows the results of an embodiment of the method of the invention applied to a crude reaction mixture of Flurpiridaz. In Figure 6, the x axis is the volume (1-41 ml) and the y axis is ug (0-25).

### Examples

The following examples describe the invention in a non-limiting fashion:

The first experiments were done using crude samples comprising the compound GE-179 with mobile phase consisting of 20, 30 and 40% ethanol in 0.1% aqueous formic acid solution. The structure of GE-179 is as follows:

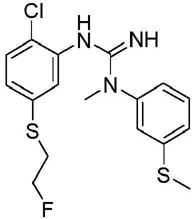

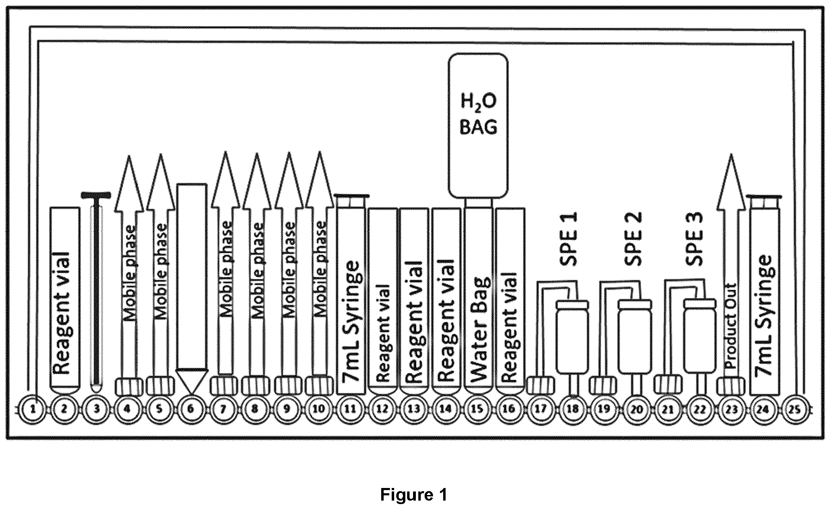

The FASTlab cassette was set-up as shown in Figure 1. All 3 cartridges were conditioned with 100% ethanol (2 mL) followed by 100% water (7 mL). Crude product (dissolved in 10% ethanol 90% water) was loaded onto 3 x tC18 cartridges. The first cartridge was washed with 20% ethanol, the second with 30% ethanol and the third with 40% ethanol (18 mL through each, 1 mL fractions collected). 54 samples were collected in a 96 well plate and analysed using an analytical HPLC system with an autosampler. The data generated showed that with 40% EtOH, everything got eluted from the cartridge in the first 6 mL, whereas with 20%, the desired product and all later eluting peaks were trapped on the cartridge after 18 mL wash. These results reveal that the optimum conditions for washing the cartridge would be greater than 20% but lower than 40% EtOH. Further experiments using the same technique are required to determine the optimum selective elution of the product.

Experiments were also performed directed to the purification of Flurpiridaz, which has the following structure:

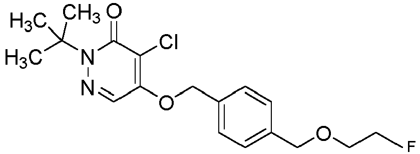

The main impurity in the Flurpiridaz crude product is a hydroxy impurity, which has the following structure:

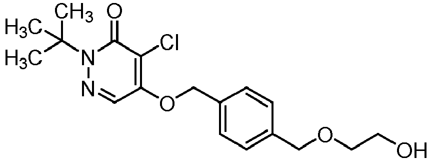

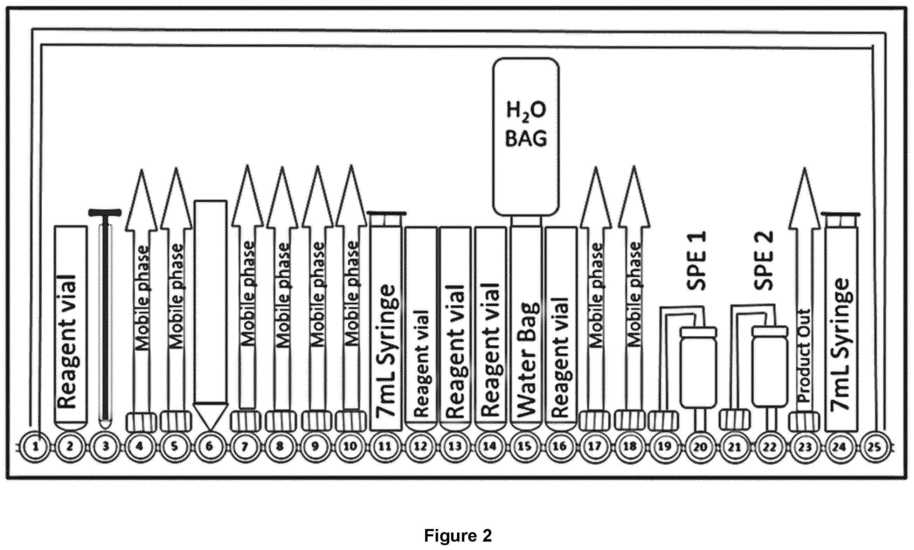

The FASTlab cassette was set up as shown in Figure 2. Both cartridges were conditioned with 100% ethanol (7 mL) followed by 100% water (7 mL). The hydroxy impurity (dissolved in 1:10 ethanol:water) was loaded onto 2 x tC18 cartridges. The first cartridge was washed with 40% acetonitrile and the second with 35% ethanol (41 mL through each, 1 mL fractions collected). 82 samples were collected in a 96 well plate and analysed using an analytical HPLC system with an autosampler.

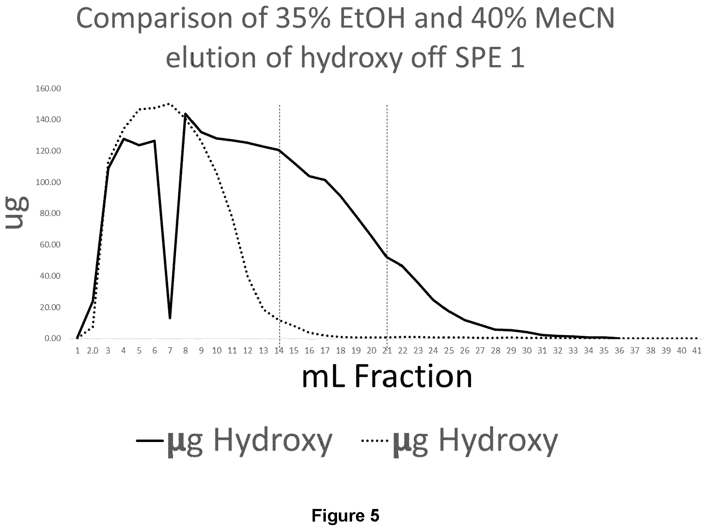

Figure 5 shows that the hydroxy impurity elutes in a tighter band with 40% acetonitrile (dotted line) compared to 35% ethanol (solid line). These results confirmed that 40% acetonitrile is better than 35% ethanol and that a wash volume of 14-21 mL was sufficient to remove the major impurity from the crude product. It is noted that the line in Figure 5 corresponding to the 35% ethanol elution includes a sharp dip, which is due to an erroneous data point.

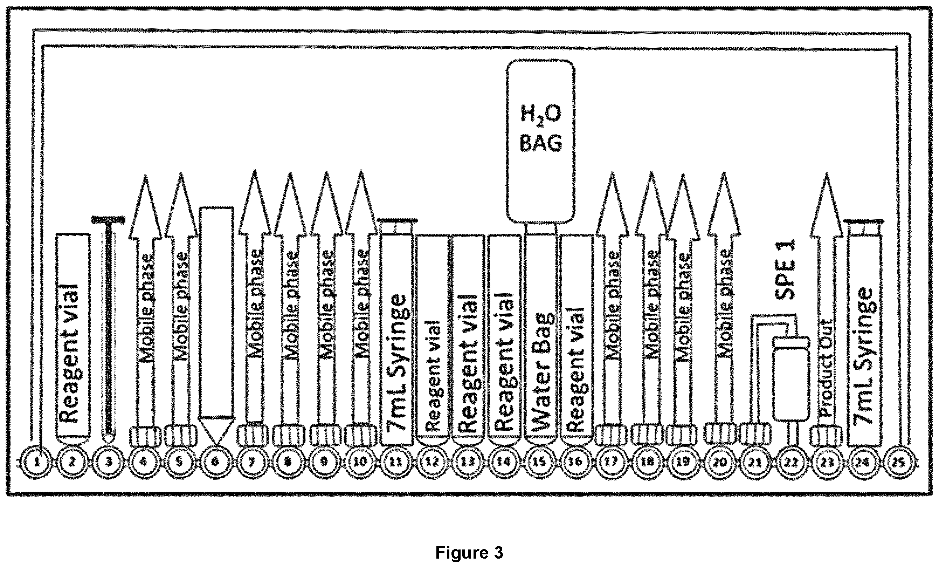

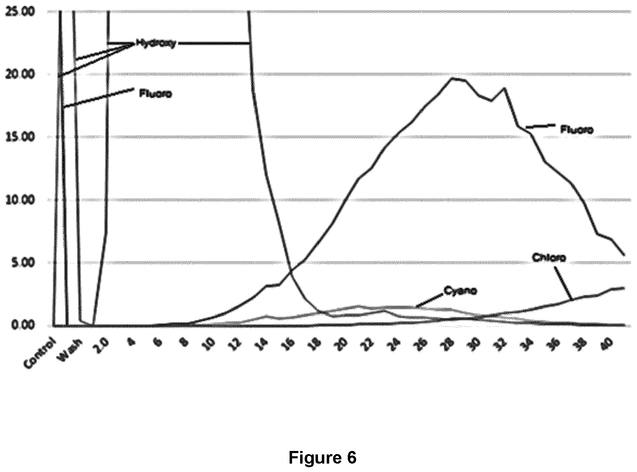

The experiment was repeated with a crude reaction mixture of Flurpiridaz:
The FASTlab cassette was set-up as shown in Figure 3. The cartridge was conditioned with 100% ethanol (7 mL) followed by 100% water (7 mL). Crude product (dissolved in ca.20% acetonitrile 80% aqueous solution) was loaded onto a tC18 cartridge. The cartridge was washed with 40% acetonitrile (41 mL, 1 mL fractions collected). 41 samples were collected in a 96 well plate and analysed using an analytical HPLC system with an autosampler. When combined with the information from the hydroxy standard experiment above, these results, shown in Figure 6, confirmed that a wash volume of ca. 16 mL was sufficient to remove the hydroxy impurity without eluting the product. Other impurities present in very small amounts were a cyano impurityand a chloro impurity.

It will be readily understood by those persons skilled in the art that the embodiments of the inventions described herein are capable of broad utility and application. Accordingly, while the invention is described herein in detail in relation to the exemplary embodiments, it is to be understood that this disclosure is illustrative and exemplary of embodiments and is made to provide an enabling disclosure of the exemplary embodiments. The disclosure is not intended to be construed to limit the embodiments of the invention or otherwise to exclude any other such embodiments, adaptations, variations, modifications and equivalent arrangements. The scope of the invention is defined by the appended claims.

## Claims

1. A cassette for determining optimised solid phase extraction (SPE) purification conditions, wherein said cassette comprises:
(i) a flowpath comprising a first end and a second end; and
(ii) a plurality of valves oriented along said flowpath, wherein each of said plurality of valves is selectively fluidly connected to one of a number of components,
wherein said components comprise:
(a) 1-5 composition vials;
(b) 1-3 SPE cartridges;
(c) 4-10 solvent vials;
(d) a water vial; and
(e) a transfer line.

2. The cassette of claim 1, wherein the cassette does not include any means for processing [¹⁸F]fluoride.

3. The cassette of claim 1 or claim 2, wherein the cassette comprises:
(i) 3 SPE cartridges and 6 solvent vials; or
(ii) 2 SPE cartridges and 8 solvent vials; or
(iii) 1 SPE cartridge and 10 solvent vials.

4. The cassette of claim 3, part (i), wherein the cassette has 25 valves in a linear array, and
(i) the 1-5 composition vials are fluidly connected to the 2^{nd}, 12^{th}, 13^{th}, 14^{th} and/or 16^{th} valve, preferably wherein a maximum of 3 composition vials are used;
(ii) the 3 SPE cartridges are fluidly connected to the 18^{th}, 20^{th} and 22^{nd} valves;
(iii) the 6 solvent vials are fluidly connected to the 4^{th}, 5^{th}, 7^{th}, 8^{th}, 9^{th} and 10^{th} valves; and
(iv) the water vial is fluidly connected to the 15^{th} valve.

5. The cassette of claim 3, part (ii), wherein the cassette has 25 valves in a linear array, and
(i) the 1-5 composition vials are fluidly connected to the 2^{nd}, 12^{th}, 13^{th}, 14^{th} and/or 16^{th} valve, preferably wherein a maximum of 2 composition vials are used;
(ii) the 2 SPE cartridges are preferably fluidly connected to the 20^{th} and 22^{nd} valves;
(iii) the 8 solvent vials are fluidly connected to the 4^{th}, 5^{th}, 7^{th}, 8^{th}, 9^{th}, 10^{th}, 17^{th} and 18^{th} valves; and
(iv) the water vial is fluidly connected to the 15^{th} valve.

6. The cassette of claim 3, part (iii), wherein the cassette has 25 valves in a linear array, and
(i) the 1-5 composition vials are fluidly connected to the 2^{nd}, 12^{th}, 13^{th}, 14^{th} and/or 16^{th} valve, preferably wherein a maximum of 1 composition vial is used;
(ii) the 1 SPE cartridge is preferably fluidly connected to the 22^{nd} valve;
(iii) the 10 solvent vials are fluidly connected to the 4^{th}, 5^{th}, 7^{th}, 8^{th}, 9^{th}, 10^{th}, 17^{th}, 18^{th}, 19^{th} and 20^{th} valves; and
(iv) the water vial is fluidly connected to the 15^{th} valve.

7. The cassette of any of claims 4 to 6, wherein the cassette further comprises:
(i) a syringe fluidly connected to the 3^{rd} valve, preferably wherein the syringe is a 1 mL syringe; and
(ii) a syringe fluidly connected to the 11^{th} valve, preferably wherein the syringe is a 7 mL syringe; and
(iii) a syringe fluidly connected to the 24^{th} valve, preferably wherein the syringe is a 7 mL syringe.

8. A method for determining optimised SPE purification conditions for the isolation of a compound from a composition, the method comprising:
(i) provision of a cassette as defined in any of claims 1 to 7;
(ii) the cassette comprising a composition of the compound in each of said 1-5 composition vials or addition of such a composition to each of said 1-5 composition vials;
(iii) passing an aliquot of said composition into each of said 1-3 SPE cartridges;
(iv) passing a particular combination of aliquots of solvent from at least 4 of said 4-10 solvent vials into one or more of the SPE cartridges, wherein the solvent in each of said 4-10 solvent vials is either a different solvent or the same solvent at different concentration;
(v) eluting the compound to be purified from the or each SPE cartridge;
(vi) evaluating the eluted products of step (v); and
(vii) determining the optimised purification conditions by comparing the eluted products of step (v) from each cartridge and each solvent.

9. The method of claim 8, wherein the method further comprises the step of eluting impurities, preferably wherein the step of eluting impurities is carried out before and/or after step (v).

10. The method of claim 8 or claim 9, wherein the at least one solvent is selected from the group consisting of: (i) ethanol, (ii) methanol, (iii) acetonitrile, or combinations thereof.

11. The method of any of claims 8 to 10, wherein the method further comprises the step of conditioning the 1-3 SPE cartridges before step (ii).

12. The method of any of claims 8 to 11, wherein the evaluation in step (vi) is performed using HPLC, LC-MS or TLC.

13. The method of any of claims 8 to 12, wherein the eluting is carried out by passing organic solvent through the SPE cartridge and through the transfer line for collection, preferably wherein the collection is in a 96-well plate.

14. The cassette of any of claims 1 to 7 or the method of any of claims 8 to 13, wherein the 1-5 composition vials are:
(i) 1-5 crude reaction mixture vials;
(ii) 1-5 single reference standard vials; or
(iii) 1-5 reference standard mixture vials,
preferably wherein 1, 2, 3, 4 or 5 composition vials are used, more preferably wherein 1, 2 or 3 composition vials are used.

15. A kit comprising:
(i) a cassette as defined in any of claims 1 to 7,
(ii) 1-5 composition vials;
(iii) 1-3 SPE cartridges;
(iv) 4-10 solvent vials;
(v) a water vial; and
(vi) a transfer line.

## Patentansprüche

1. Kassette zum Bestimmen von optimierten Aufreinigungsbedingungen für Festphasenextraktion (SPE), wobei die Kassette umfasst:
(i) einen Strömungspfad, umfassend ein erstes Ende und ein zweites Ende; und
(ii) eine Vielzahl von Ventilen, angeordnet entlang des Strömungspfads, wobei jedes der Vielzahl von Ventilen selektiv fluidisch verbunden ist mit einer von mehreren Komponenten, wobei die Komponenten umfassen:
(a) 1-5 Zusammensetzungsfläschchen;
(b) 1-3 SPE-Kartuschen;
(c) 4-10 Lösungsmittelfläschchen;
(d) ein Wasserfläschchen; und
(e) eine Übertragungsleitung.

2. Kassette nach Anspruch 1, wobei die Kassette kein Mittel zum Verarbeiten von [¹⁸F]Fluorid einschließt.

3. Kassette nach Anspruch 1 oder 2, wobei die Kassette umfasst:
(i) 3 SPE-Kartuschen und 6 Lösungsmittelfläschchen; oder
(ii) 2 SPE-Kartuschen und 8 Lösungsmittelfläschchen; oder
(iii) 1 SPE-Kartusche und 10 Lösungsmittelfläschchen.

4. Kassette nach Anspruch 3, Teil (i), wobei die Kassette 25 Ventile in einer linearen Anordnung aufweist, und
(i) die 1-5 Zusammensetzungsfläschchen fluidisch verbunden sind mit dem 2., 12., 13., 14. und/oder 16. Ventil, vorzugsweise wobei höchstens 3 Zusammensetzungsfläschchen eingesetzt werden;
(ii) die 3 SPE-Kartuschen fluidisch verbunden sind mit dem 18., 20. und 22. Ventil;
(iii) die 6 Lösungsmittelfläschchen fluidisch verbunden sind mit dem 4., 5., 7., 8., 9. und 10. Ventil; und
(iv) das Wasserfläschchen fluidisch verbunden ist mit dem 15. Ventil.

5. Kassette nach Anspruch 3, Teil (ii), wobei die Kassette 25 Ventile in einer linearen Anordnung aufweist, und
(i) die 1-5 Zusammensetzungsfläschchen fluidisch verbunden sind mit dem 2., 12., 13., 14. und/oder 16. Ventil, vorzugsweise wobei höchstens 2 Zusammensetzungsfläschchen eingesetzt werden;
(ii) die 2 SPE-Kartuschen vorzugsweise fluidisch verbunden sind mit dem 20. und 22. Ventil;
(iii) die 8 Lösungsmittelfläschchen fluidisch verbunden sind mit dem 4., 5., 7., 8., 9., 10., 17. und 18. Ventil; und
(iv) das Wasserfläschchen fluidisch verbunden ist mit dem 15. Ventil.

6. Kassette nach Anspruch 3, Teil (iii), wobei die Kassette 25 Ventile in einer linearen Anordnung aufweist, und
(i) die 1-5 Zusammensetzungsfläschchen fluidisch verbunden sind mit dem 2., 12., 13., 14. und/oder 16. Ventil, vorzugsweise wobei höchstens 1 Zusammensetzungsfläschchen eingesetzt wird;
(ii) die 1 SPE-Kartusche vorzugsweise fluidisch verbunden ist mit dem 22. Ventil;
(iii) die 10 Lösungsmittelfläschchen fluidisch verbunden sind mit dem 4., 5., 7., 8., 9., 10., 17., 18., 19. und 20. Ventil; und
(iv) das Wasserfläschchen fluidisch verbunden ist mit dem 15. Ventil.

7. Kassette nach einem der Ansprüche 4 bis 6, wobei die Kassette ferner umfasst:
(i) eine Spritze, fluidisch verbunden mit dem 3. Ventil, vorzugsweise wobei die Spritze eine 1-ml-Spritze ist; und
(ii) eine Spritze, fluidisch verbunden mit dem 11. Ventil, vorzugsweise wobei die Spritze eine 7-ml-Spritze ist; und
(iii) eine Spritze, fluidisch verbunden mit dem 24. Ventil, vorzugsweise wobei die Spritze eine 7-ml-Spritze ist.

8. Verfahren zum Bestimmen optimierter SPE-Aufreinigungsbedingungen zum Isolieren einer Verbindung aus einer Zusammensetzung, das Verfahren Umfassend:
(i) Bereitstellen einer Kassette, nach einem der Ansprüche 1 bis 7;
(ii) die Kassette umfassend eine Zusammensetzung der Verbindung in jedem der 1-5 Zusammensetzungsfläschchen oder die Zugabe einer solchen Zusammensetzung in jedes der 1-5 Zusammensetzungsfläschchen;
(iii) Geben einer Menge der Zusammensetzung in jede der 1-3 SPE-Kartuschen;
(iv) Geben einer bestimmten Kombination von Mengen von Lösungsmittel aus mindestens 4 der 4-10 Lösungsmittelfläschchen in eine oder mehrere der SPE-Kartuschen, wobei das Lösungsmittel in jedem der 4-10 Lösungsmittelfläschchen entweder ein anderes Lösungsmittel oder das gleiche Lösungsmittel in einer anderen Konzentrationen ist;
(v) Eluieren der aufzureinigenden Verbindung aus der oder aus jeder SPE-Kartusche;
(vi) Auswerten der eluierten Produkte aus Schritt (v); und
(vii) Bestimmen der optimierten Aufreinigungsbedingungen durch Vergleichen der eluierten Produkte aus Schritt (v) aus jeder Kartusche und jedes Lösungsmittels.

9. Verfahren nach Anspruch 8, wobei das Verfahren ferner den Schritt des Eluierens von Verunreinigungen umfasst, vorzugsweise wobei der Schritt des Eluierens von Verunreinigungen vor und/oder nach Schritt (v) durchgeführt wird.

10. Verfahren nach Anspruch 8 oder 9, wobei das mindestens eine Lösungsmittel ausgewählt ist aus der Gruppe bestehend aus: (i) Ethanol, (ii) Methanol, (iii) Acetonitril und Kombinationen daraus.

11. Verfahren nach einem der Ansprüche 8 bis 10, wobei das Verfahren ferner den Schritt des Konditionierens der 1-3 SPE-Kartuschen vor Schritt (ii) umfasst.

12. Verfahren nach einem der Ansprüche 8 bis 11, wobei das Auswerten in Schritt (vi) unter Einsatz von HPLC, LC-MS oder TLC durchgeführt wird.

13. Verfahren nach einem der Ansprüche 8 bis 12, wobei das Eluieren durch Durchleiten von organischem Lösungsmittel durch die SPE-Kartusche und durch die Übertragungsleitung zum Sammeln durchgeführt wird, vorzugsweise wobei das Sammeln in einer Platte mit 96 Vertiefungen ausgeführt wird.

14. Kassette nach einem der Ansprüche 1 bis 7 oder Verfahren nach einem der Ansprüche 8 bis 13, wobei die 1-5 Zusammensetzungsfläschchen sind:
(i) 1-5 Rohreaktionsgemischfläschchen;
(ii) 1-5 Einzelreferenzstandardfläschchen; oder
(iii) 1-5 Referenzstandardgemischfläschchen, vorzugsweise wobei 1, 2, 3, 4 oder 5 Zusammensetzungsfläschchen eingesetzt werden, stärker bevorzugt wobei 1, 2 oder 3 Zusammensetzungsfläschchen eingesetzt werden.

15. Kit, umfassend:
(i) eine Kassette nach einem der Ansprüche 1 bis 7,
(ii) 1-5 Zusammensetzungsfläschchen;
(iii) 1-3 SPE-Kartuschen;
(iv) 4-10 Lösungsmittelfläschchen;
(v) ein Wasserfläschchen; und
(vi) eine Übertragungsleitung.

## Revendications

1. Cassette pour la détermination de conditions de purification par extraction en phase solide (SPE) optimisées, ladite cassette comprenant :
(i) une voie d'écoulement comprenant une première extrémité et une deuxième extrémité ; et
(ii) une pluralité de vannes orientées le long de ladite voie d'écoulement, chacune de ladite pluralité de vannes étant reliée sélectivement fluidiquement à l'un parmi un nombre de composants, lesdits composants comprenant :
(a) 1-5 flacons de composition ;
(b) 1-3 cartouches SPE ;
(c) 4-10 flacons de solvant ;
(d) un flacon d'eau ; et
(e) une ligne de transfert.

2. Cassette selon la revendication 1, la cassette ne comprenant aucun moyen pour traiter du fluorure [¹⁸F].

3. Cassette selon la revendication 1 ou la revendication 2, la cassette comprenant :
(i) 3 cartouches SPE et 6 flacons de solvant ; ou
(ii) 2 cartouches SPE et 8 flacons de solvant ; ou
(iii) 1 cartouche SPE et 10 flacons de solvant.

4. Cassette selon la revendication 3, partie (i), la cassette possédant 25 vannes dans un réseau linéaire, et
(i) les flacons de composition 1 à 5 étant reliés fluidiquement à la 2e, 12e, 13e, 14e et/ou 16e vanne, préférablement un maximum de 3 flacons de composition étant utilisés ;
(ii) les 3 cartouches SPE étant raccordées fluidiquement aux 18ème, 20ème et 22ème vannes ;
(iii) les 6 flacons de solvant étant raccordés fluidiquement aux 4e, 5e, 7e, 8e, 9e et 10e vannes ; et
(iv) le flacon d'eau étant relié fluidiquement à la 15e vanne.

5. Cassette selon la revendication 3, partie (ii), la cassette possédant 25 vannes dans un réseau linéaire, et
(i) les flacons de composition 1 à 5 étant reliés fluidiquement à la 2e, 12e, 13e, 14e et/ou 16e vanne, préférablement un maximum de 2 flacons de composition étant utilisés ;
(ii) les 2 cartouches SPA étant préférablement reliées fluidiquement au 20e et 22e vannes ;
(iii) les 8 flacons de solvant étant reliés fluidiquement aux 4ème, 5ème, 7ème, 8ème, 9ème, 10ème, 17ème et 18ème vannes ; et
(iv) le flacon d'eau étant relié fluidiquement à la 15e vanne.

6. Cassette selon la revendication 3, partie (iii), la cassette possédant 25 vannes dans un réseau linéaire, et
(i) les flacons de composition 1 à 5 étant reliés fluidiquement à la 2ème, 12ème, 13ème, 14ème et/ou 16ème vanne, préférablement en utilisant au maximum 1 flacon de composition ;
(ii) la cartouche SPE 1 étant préférablement reliée fluidiquement à la 22e vanne ;
(iii) les 10 flacons de solvant étant reliés fluidiquement aux 4ème, 5ème, 7ème, 8ème, 9ème, 10ème, 17ème, 18ème, 19ème et 20ème vannes ; et
(iv) le flacon d'eau étant relié fluidiquement à la 15e vanne.

7. Cassette selon l'une quelconque des revendications 4 à 6, la cassette comprenant en outre :
(i) une seringue reliée fluidiquement à la 3e vanne, préférablement, la seringue étant une seringue de 1 mL ; et
(ii) une seringue reliée fluidiquement à la 11e vanne, préférablement, la seringue étant une seringue de 7 mL ; et
(iii) une seringue reliée fluidiquement à la 24e vanne, préférablement, la seringue étant une seringue de 7 mL.

8. Procédé pour la détermination de conditions de purification SPE optimisées pour l'isolement d'un composé à partir d'une composition, le procédé comprenant :
(i) la fourniture d'une cassette telle que définie dans l'une quelconque des revendications 1 à 7 ;
(ii) la cassette comprenant une composition du composé dans chacun desdits 1 à 5 flacons de composition ou l'ajout d'une telle composition à chacun desdits 1 à 5 flacons de composition ;
(iii) le passage d'une partie aliquote de ladite composition dans chacune desdites 1 à 3 cartouches SPE ;
(iv) le passage d'une combinaison particulière de parties aliquotes de solvant d'au moins 4 desdits 4 à 10 flacons de solvant dans une ou plusieurs des cartouches SPE, le solvant dans chacun desdits 4 à 10 flacons de solvant étant soit un solvant différent, soit le même solvant à une concentration différente ;
(v) l'élution du composé à purifier de la cartouche SPE ou de chaque cartouche SPE ;
(vi) l'évaluation des produits élués de l'étape (v) ; et
(vii) la détermination des conditions de purification optimisées en comparant les produits élués de l'étape (v) de chaque cartouche et chaque solvant.

9. Procédé selon la revendication 8, le procédé comprenant en outre l'étape d'élution d'impuretés, préférablement, l'étape d'élution d'impuretés étant réalisée avant et/ou après l'étape (v).

10. Procédé selon la revendication 8 ou la revendication 9, l'au moins un solvant étant choisi dans le groupe constitué par : (i) éthanol, (ii) méthanol, (iii) acétonitrile ou des combinaisons correspondantes.

11. Procédé selon l'une quelconque des revendications 8 à 10, le procédé comprenant en outre l'étape de conditionnement des 1 à 3 cartouches SPE avant l'étape (ii) .

12. Procédé selon l'une quelconque des revendications 8 à 11, l'évaluation dans l'étape (vi) étant réalisée en utilisant une HPLC, une LC-MS ou une TLC.

13. Procédé selon l'une quelconque des revendications 8 à 12, l'élution étant réalisée en passant un solvant organique à travers la cartouche SPE et à travers la ligne de transfert pour une collecte, préférablement la collecte étant dans une plaque à 96 puits.

14. Cassette selon l'une quelconque des revendications 1 à 7 ou procédé selon l'une quelconque des revendications 8 à 13, les 1 à 5 flacons de composition étant :
(i) 1 à 5 flacons de mélange de réaction brut ;
(ii) 1 à 5 flacons d'étalon de référence unique ; ou
(iii) 1 à 5 flacons de mélange d'étalons de référence, préférablement, 1, 2, 3, 4 ou 5 flacons de composition étant utilisés, plus préférablement, 1, 2 ou 3 flacons de composition étant utilisés.

15. Kit comprenant :
(i) une cassette telle que définie dans l'une quelconque des revendications 1 à 7,
(ii) 1 à 5 flacons de composition ;
(iii) 1 à 3 cartouches SPE ;
(iv) 4 à 10 flacons de solvant ;
(v) un flacon d'eau ; et
(vi) une ligne de transfert.
